# EUROPEAN PATENT APPLICATION

(11) **EP 2 529 803 A2**
(43) Date of publication of application: **05.12.2012**
(21) Application number: 12170636.0
(22) Date of filing: 02.06.2012
(51) Int. Cl.: A63F 9/06, A63F 9/08, A63F 9/10, A63H 33/04, G02B 5/04, G02B 27/02, G02B 6/00

(54) **LIGHT GUIDE UNIT AND OPTICAL DEVICES USING THE SAME**

(30) Priority: 02.06.2011 TW 100119345; 02.06.2011 TW 100119343; 02.06.2011 TW 100119344; 24.11.2011 TW 100222213
(71) Applicant: Foshan Lattice Energy Technology Corporation, Foshan City, Guangdong (CN); Lattice Energy Technology Corporation, Taipei City 110 (TW)
(72) Inventor: Whang, Jong-Woei, 110 Taipei City (TW); Chen, Chien-Chun, 110 Taipei City (TW); Kao, Chien-Hsun, 110 Taipei City (TW); Lin, Min-Han, 110 Taipei City (TW); Guo, Chia-Yu, 110 Taipei City (TW); Tseng, Shih-Han, 110 Taipei City (TW); Chou, Chun-Han, 110 Taipei City (TW); Lin, Shang-Ching, 110 Taipei City (TW); Chien, Ta-Yi, 110 Taipei City (TW); Hsu, Hai-Yin, 110 Taipei City (TW); Chen, Kuan-Pei, 110 Taipei City (TW); Hu, Fen-Ling, 110 Taipei City (TW); Chen, Kuan-Yu, 110 Taipei City (TW); Lee, Wei-Yu, 110 Taipei City (TW); Lee, Kun-Yi, 110 Taipei City (TW); Lin, Yen-Juei, 110 Taipei City (TW)
(74) Representative: Lang, Christian

(57) **Abstract**

A light guide unit provided in this disclosure is used for performing a reversible optical conversion process on a light source. In an embodiment, the light guide unit is used for converting a planar light source into at least a linear light source, and then further to be converted into one point light source, while allowing beams emitted from the point light source to be guided and shot to a specific position by the use of a light-guiding element. Moreover, in another embodiment, the light guide unit is used for converting at least one point light source into at least a linear light source, and then further to be converted into a planar light source for emitting light. The light guide unit can be adapted for various applications, such as optical devices for illumination, entertainment, decoration or ornaments.

## Description

### FIELD OF THE INVENTION

The present invention relates to a light guide technology, and more particularly, to a light guide unit capable of paralleling and guiding various beams travelling in different light paths through a refraction means to a predetermined position for emitting, and also to a variety of optical applications using the light guide unit, such as optical devices for illumination, entertainment, decoration or ornaments.

### BACKGROUND OF THE INVENTION

In our modern society, there can be more and more optical devices used in our daily life. Most commons are those used for illumination, but they also can be used in toys and ornaments.

It is noted that there are already a variety of optical devices being applied in toys and ornaments for using the light effects created thereby to improve the playfulness of toys or glamorous of ornaments. Taking the well-known Rubik's cube for instance, the attractiveness of the Rubik's cube to a user can drop exponentially after the user had successfully returned each of the six faces to consisting of one color for multiple times. Moreover, since the color stickers on a Rubik's cube might peel off from the cube or the color of the stickers might fade away after being played for a long period of time, it is possible that the Rubik's cube is considered to be unplayful when there are too many color stickers that are lost or faded. Thus, if the function of the color sticker is replaced by some optical devices capable of emitting lights of different colors, not only the aforesaid drawbacks can be prevented, but also the playfulness of the optical cube can be greatly enhanced.

There can be a similar condition to a common toy block, such as Lego blocks. That is, although Lego blocks can be assembled and connected in many ways, to construct such 3D objects as vehicles, buildings, and even working robots, while allowing anything constructed to be taken apart again, and then used to make other objects, the attractiveness of Lego blocks to a user can also drop exponentially after all the possible assemblies of the Lego blocks had be explored by the user. Therefore, if there are new toy blocks being developed that are capable of emitting lights of different colors, the playfulness of the toy blocks can be greatly enhanced since they can be used to construct 3D models with various decorative light effects.

The above situation is also true to the common puzzle toys. Generally, after successfully piecing together all the pieces in a puzzle game, only a predetermined pattern can be reviewed without surprise. Thus, it is intended to incorporate certain optical devices into a common puzzle toy so as to enable the puzzle toy to display some attractable light effect for enhancing the playfulness of the same.

Moreover, taking a common key ring from the applications of ornament for instance. As most key rings are made of metal in a plain and simple shape that are dull and stiff, it is common for users to couple some plastic or metal ornaments, or even a mini tool, such as a mini flash light, to a key ring for beautification. Nevertheless, it is preferred to have a key ring to incorporate with certain optical devices or light guide units so that the key ring itself can be beautiful and shiny on its own, while being used for illumination, light gathering or even color dispersion.

### SUMMARY OF THE INVENTION

In view of the disadvantages of prior art, the object of the present invention is to provide an optical device, being substantially an optical cube, which is capable of using a pivot mechanism to enable each face of the cube to turn independently for returning each of the six faces to consisting of one color while allowing its light guide units to construct a specific light path in the cube for guiding the beams that are emitted from its light emitting units and guided by their corresponding light-guiding elements to travel therein, so that the playfulness and the beautification of the optical cube are improved.

Another object of the present invention is to provide a toy block, which can have its blocks to be assembled freely into any shape at will while having all the light guide units in the blocks to connect with each other into a light path that allows the light emitted from the light emitting units to be transmitted therein, so that that the playfulness and the beautification of the 3D toy block resulting from the assembled blocks are improved.

Moreover, another object of the present invention is to provide an optical ornament device with light guide units, which is capable of integrating itself with an object, such as a key, a cellular phone or a hair pin, so as to enhance the beauty and pattern changing of the object through the light gathering, focusing and transmitting of its light guide units, while allowing the object to be used for illumination, light gathering or even color dispersion.

Moreover, another object of the present invention is to provide an puzzle game, which can have its light guide units to be inset and assembled into a carrying frame at will while having all the light guiding elements to be arranged corresponding to each other into a predetermined light path when all the light guide units are disposed into the carrying frame at their designated positions, so that allows the beams emitted from its light emitting units to be transmitted therein, and thus the playfulness and the beautification of the puzzle game can be improved, or even 3D projections constructed by the light projected from the puzzle game.

In an exemplary embodiment, the present invention provides a light guide unit, comprising: at least one optical brick, each formed with an optical surface, a first optical conversion part, and a second optical conversion part. The optical surface is provided for receiving beams from an incident light source or for acting as an emanating light source for emitting light therefrom. The first optical conversion part is arranged at a position corresponding to the optical surface for paralleling beams from the incident light source so as to convert the incident light source into at least one first linear light source, or for guiding beams from at least one second linear light source to be emitted out of the optical surface while converting the at least one second linear light source into a planar light source. The second optical conversion part is connected to a side of the first optical conversion part for receiving and paralleling beams from the at least one first linear light source so as to convert the at least one first linear light source into one point light source for emitting out of the optical brick, or for receiving and guiding beams from at least one second point light source to be emitted out of the second optical conversion part while converting the at least one second point light source into the at least one second linear light source.

In another exemplary embodiment, the present invention provides an optical device, which comprises: a carrying frame, at least a light emitting unit, at least one light guide unit. The carrying frame is formed with an accommodation area on a surface thereof. The light emitting unit is integrated in the carrying frame and is used to act as an incident light source. Each of the at least one light guide unit is designed to be movably fitted into the accommodation area, and each is formed with at least one optical brick having an optical surface, a first optical conversion part, and a second optical conversion part, in a manner that the optical surface is provided for acting as an emanating light source for emitting light therefrom; the first optical conversion part is arranged at a position corresponding to the optical surface for receiving and guiding beams from at least one linear light source to be emitted out of the optical surface while converting the at least one linear light source into the emanating light source; and the second optical conversion part is connected to a side of the first optical conversion part for receiving and guiding beams from at least one point light source to be emitted out of the second optical conversion part while converting the at least one point light source into the at least one linear light source. In a modified embodiment, each of the light guide unit has a light-guiding element arranged at a position corresponding to the optical path of the beam emitted from the at least one light emitting unit.

In another exemplary embodiment, the present invention further provides an optical device, which comprises: an optical cube having a plurality of dices and at least a light emitting unit. The optical cube, being a cube consisting of a plurality of dices that are movably coupled to each other by a pivot mechanism to enable each dice to turn independently, and each dice is attached with a color element on a face thereof that is arranged facing to the outside of the optical cube. Each of the plural dices has a light guide unit which is composed of at least an optical brick and al ight-guiding element that is coupled to the optical brick, whereas the optical brick is formed with an optical surface, a first optical conversion part, and a second optical conversion part, in a manner that the optical surface is provided for receiving beams from an incident light source; the first optical conversion part is arranged at a position corresponding to the optical surface for paralleling beams from the incident light source so as to convert the incident light source into at least one linear light source; and the second optical conversion part is connected to a side of the first optical conversion part for receiving and paralleling beams of the at least one linear light source so as to convert the at least one linear light source into one point light source for emitting out of the optical brick. Moreover, the light emitting unit is arranges inside at least one dice selected from the plural dices to be used as the incident light source.

In another exemplary embodiment, the present invention further provides an optical device, which comprises: a plurality of blocks having a plurality of light guide units and at least one light emitting unit. Each of the plural blocks is formed with a plurality of couplers at the top thereof and an inset zone at the bottom thereof that is formed compatible to the couplers of each block for allowing the same to inset therein. Each of the plural light guide units that is designed to be integrated inside one block is composed of a light-guiding element and at least an optical brick arranged corresponding to the light-guiding element, and after any number of the plural blocks are assembled and connected to each other, the light guide units that are integrated therein are arranged at positions corresponding to each other for forming an optical path inside the assembled structure of the blocks. Moreover, each of the optical bricks is formed with an optical surface, a first optical conversion part, and a second optical conversion part, in a manner that the optical surface is provided for receiving beams from an incident light source; the first optical conversion part is arranged at a position corresponding to the optical surface for paralleling beams from the incident light source so as to convert the incident light source into at least one linear light source; and the second optical conversion part is connected to a side of the first optical conversion part for receiving and paralleling beams of the at least one linear light source so as to convert the at least one linear light source into one point light source for emitting out of the optical brick. Moreover, the at least one light emitting unit is arranged inside at least one block selected from the plural blocks to be used as the incident light source.

In another exemplary embodiment, the present invention further provides an optical ornament device, which comprises: one light guide unit having at least one optical brick and a connection element, in which each of the at least one optical brick is formed with an optical surface, a first optical conversion part, and a second optical conversion part. The optical surface is provided for receiving beams from an incident light source or for acting as an emanating light source for emitting light therefrom. The first optical conversion part is arranged at a position corresponding to the optical surface for paralleling beams from the incident light source so as to convert the incident light source into at least one first linear light source, or for guiding beams from at least one second linear light source to be emitted out of the optical surface while converting the at least one second linear light source into a planar light source. The second optical conversion part is connected to a side of the first optical conversion part for receiving and paralleling beams from the at least one first linear light source so as to convert the at least one first linear light source into one point light source for emitting out of the optical brick, or for receiving and guiding beams from the at least one second point light source to be emitted out of the second optical conversion part while converting the at least one second point light source into the at least one second linear light source. In addition, the connection element is used for connecting to the light guide unit.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:

FIG. 1 is a three-dimensional diagram showing a first exemplary light guide unit of the present invention and the optical path formed thereby.

FIG. 2 is a schematic diagram showing a reversible optical path capable of being achieved by the light guide unit of the present invention.

FIG. 3 is a schematic diagram showing a first exemplary optical device of the present invention.

FIG. 4 is an exploded views of a first exemplary optical device with light-guiding element.

FIG. 5 is a schematic diagram showing the first exemplary optical device of FIG. 3 in operation.

FIG. 6 is an exploded view of a first exemplary optical device without light-guiding element of the present invention.

FIG. 7 is a schematic diagram showing the first exemplary optical device of FIG. 6 in operation.

FIG. 8 is an exploded view of a first exemplary optical device with light-guiding element of the present invention.

FIG. 9 is a schematic diagram showing the first exemplary optical device of FIG. 8 in operation.

FIG. 10 is an exploded view of a second exemplary optical device of the present invention.

FIG. 11 is a schematic diagram showing how each dice in the second exemplary optical device is coupled to a light guide unit.

FIG. 12 is a schematic diagram showing the second exemplary optical device of FIG. 10 in operation.

FIG. 13 is a schematic diagram showing how a beam is guided to travel inside the second exemplary optical device of the invention.

FIG. 14 is an exploded view of a third exemplary optical device of the present invention.

FIG. 15 is a schematic diagram showing a light guide unit used in the third exemplary optical device of the present invention.

FIG. 16 is a cross sectional view of the third exemplary optical device of the present invention.

FIG. 17 is a schematic diagram showing the third exemplary optical device of FIG. 14 in operation.

FIG. 18 is a schematic diagram showing a first exemplary optical ornament device of the present invention.

FIG. 19 and FIG. 20 are respectively schematic diagrams showing a second and a third exemplary optical ornament devices of the present invention.

FIG. 21 is a schematic diagram showing an optical brick of the optical ornament device of present invention.

FIG. 22 is a schematic diagram showing the first exemplary optical ornament device of the present invention in operation.

FIG. 23 and FIG. 24 are respectively schematic diagrams showing a fourth and a fifth exemplary optical ornament devices of the present invention.

### DESCRIPTION OF THE EXEMPLARY EMBODIMENTS

For your esteemed members of reviewing committee to further understand and recognize the fulfilled functions and structural characteristics of the invention, several exemplary embodiments cooperating with detailed description are presented as the follows.

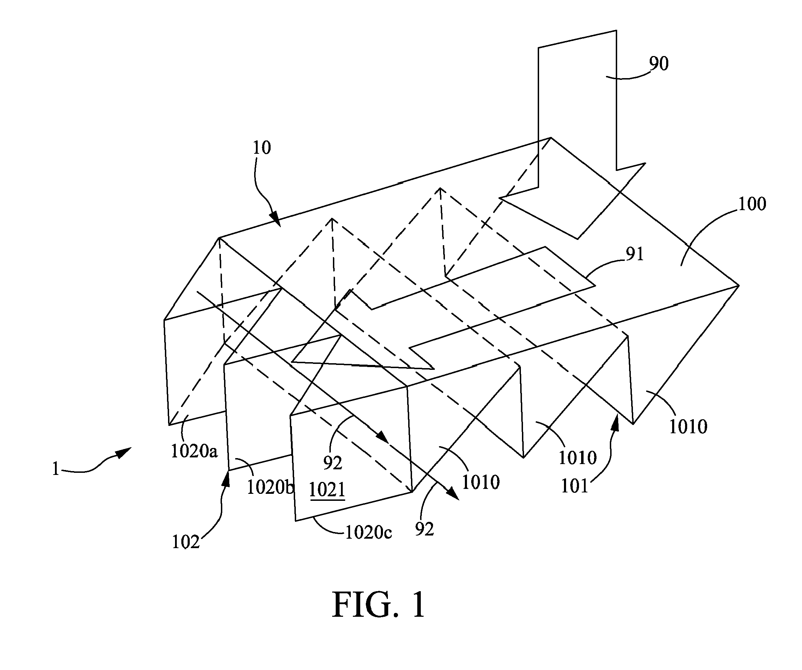

Please refer to FIG. 1, which is a three-dimensional diagram showing a first exemplary light guide unit of the present invention and the optical path formed thereby. In this embodiment, the light guide unit 1 comprises: at least one optical brick 10, each formed with an optical surface 100, a first optical conversion part 101, and a second optical conversion part 102. Moreover, the optical brick 10 can be made of plastic, glass or crystal, but is not limited thereby only if it is transparent. The optical surface 100 is provided for receiving beams from an incident light source 90 that the incident light source 90 can be a planar light source in this embodiment, such as sun, light bulb, or light emitting diode, etc.

The first optical conversion part 101 that is disposed corresponding to the optical surface 100 in this embodiment is composed of a plurality of first prisms 1010. It is noted that the cross section of each first prism 1010 can be any polygon, but in this embodiment, it is formed in a shape of a triangle, i.e. each first prism 1010 can be a column with triangle-shape cross section, but is not limited thereby. In addition, the plural first prisms 1010 are arranged in a saw-toothed like formation. Operationally, the first optical conversion part 101 is arranged at a position corresponding to the optical surface 100 for paralleling beams from the incident light source 90 so as to convert the incident light source 90 into at least one first linear light source 91, i.e. the beams emitted from the incident light source 90 that enter the first optical conversion part 101 through the optical surface 100 at different incident positions will be refracted and redirected by the plural first prisms 1010 for enabling those beams to travel in the same direction and thus converting the planar light source 90 into at least one first linear light source 91.

Accordingly, the second optical conversion part 102 is connected to a side of the first optical conversion part 101 for receiving and paralleling beams from the at least one first linear light source 91 so as to convert the at least one first linear light source 91 into one first point light source 92 for emitting out of the optical brick 10. Similarly, the second optical conversion part 102 is composed of a plurality of second prisms 1020a, 1020b and 1020c. It is noted that the cross section of each second prism 1020a, 1020b and 1020c can be any polygon, but in this embodiment, it is formed in a shape of a triangle, i.e. each first prism 1010 can be a column with triangle-shape cross section, but is not limited thereby. In addition, the plural second prisms 1020a, 1020b and 1020c are also arranged in a saw-toothed formation. It is noted that when beams of the at least one first linear light source 91 that are emitted out of the first optical conversion part 101 are projected onto the second prisms 1020a, 1020b and 1020c of the second optical conversion part 102, they will be refracted and paralleled to travel on the same optical path, so that the at least one first linear light source 91 is converted into one first point light source 92 as it is being emitted out of the optical brick 10 from a receiving side 1021 of the second prism 1020c. Thereafter, since the planar light source 90 had already been converted into the point light source 92, it is now capable of using a light guide unit, such as optical fibers, to guide the light emitted from the point light source 92 to any location at will for illumination or other usages.

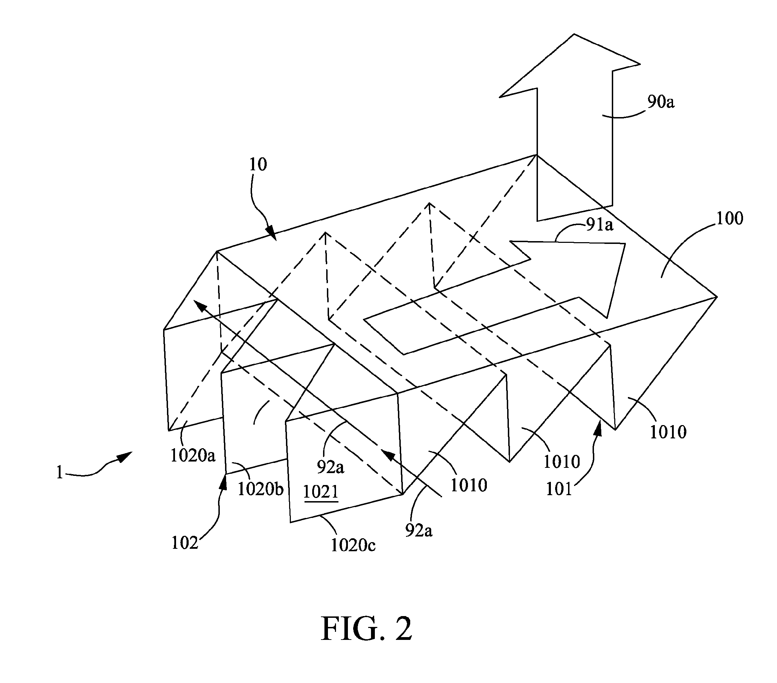

Please refer to FIG. 2, which is a schematic diagram showing a reversible optical path capable of being achieved by the light guide unit of the present invention. According to the reversibility of light, the aforesaid optical path in each optical brick 10 can be reverse. That is, it is possible to guide beams from at least one second point light source 92a to the receiving side 1021 of the second optical conversion part through optical fibers, where those beams will be converted by the second optical conversion part in a way that the at least one second point light source 92a is converted into at least one second linear light source 91a. Thereafter, beams of at least one second point light source 92a will be emitted out of the second optical conversion part and projected onto the first optical conversion part where those beams can further be converted thereby in a way that the at least one second linear light source 91a is converted into a planar light source 90a to be emitted out of the optical surface of the optical brick. It is known to those skilled in the art that the principle of the aforesaid optical path is the same as the one described in FIG. 1 and thus will not be described further herein.

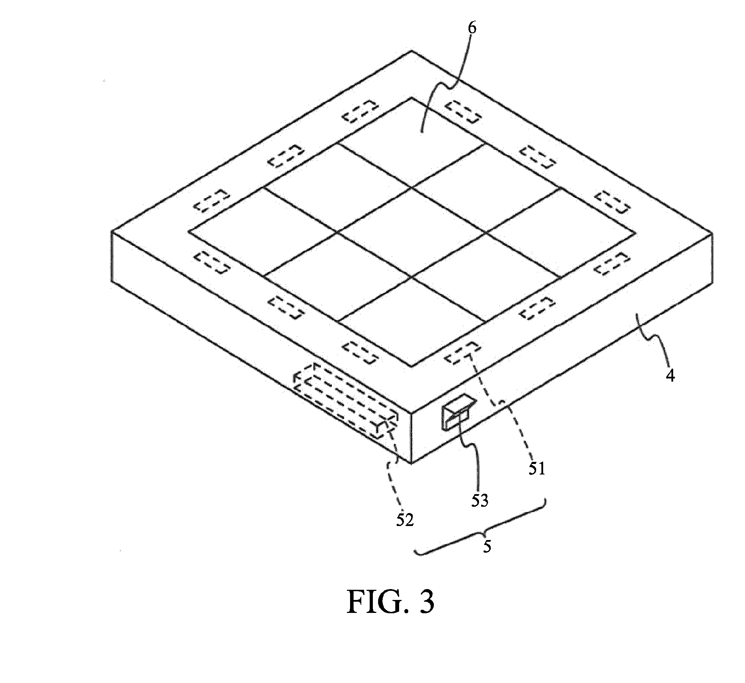

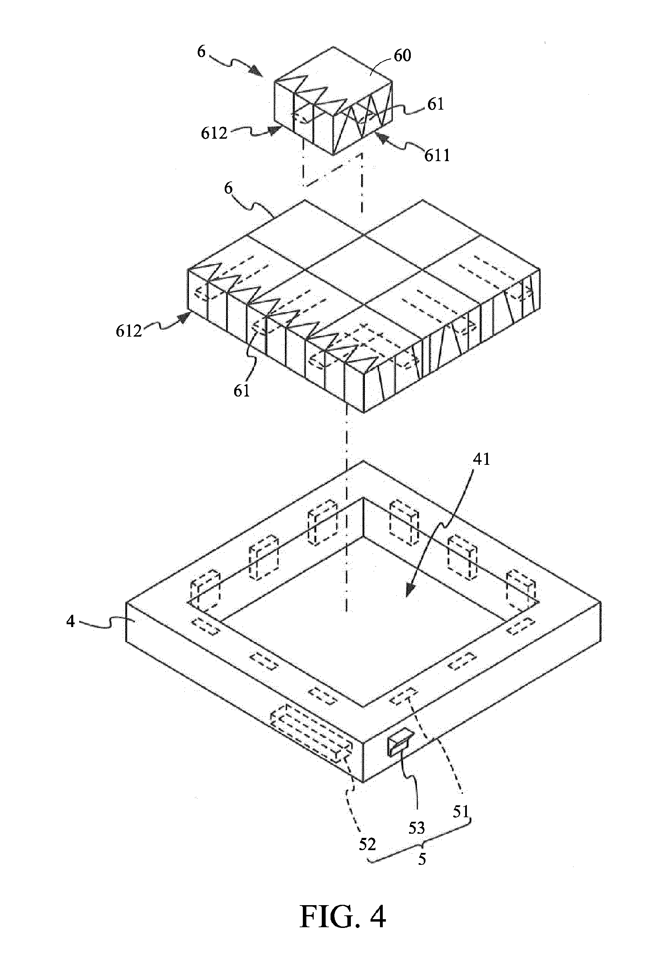

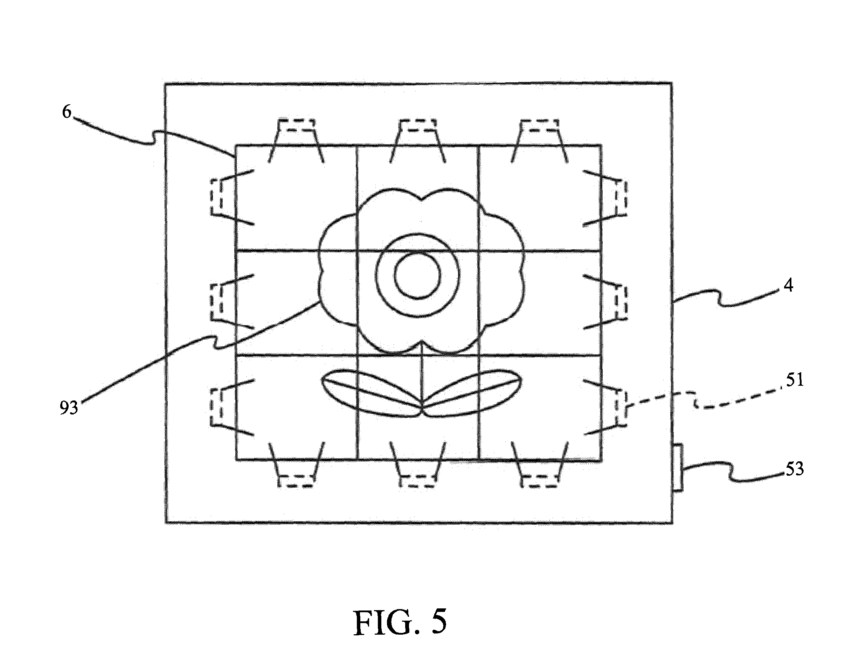

FIG. 3 is a schematic diagram showing a first exemplary optical device of the present invention. FIG. 4 is exploded views of a first exemplary optical device with light-guiding elements. FIG. 5 is a schematic diagram showing the first exemplary optical device of FIG. 3 in operation. As shown in FIG. 3, FIG. 4 and FIG. 5, the present invention provides an optical device, which is substantially a puzzle game and is comprised of: a carrying frame 4, at least a light emitting unit 5, and a plurality of light guide units having at least one optical brick 6. The carrying frame 4 is formed with an accommodation area 41 on at least one surface thereof, whereas all the sidewalls of the accommodation area 41 are made of transparent materials.

In this embodiment, the light emitting unit 5 is integrated in the carrying frame 4 and is composed of: a plurality of light sources 51, each being arranged at positions corresponding to the accommodation area 41; a power 52, being electrically connected to the plural light sources 51; and a switch 53, being electrically connected to the plural light sources 51 and the power 52. It is noted that each of the light sources 51 can be a light bulb, nature light, a laser diode or a light emitting diode; the power can be a battery, a solar cell, or an external power source; and the switch can be a dip switch, a push switch, or a touch switch.

Each of the plural light guide units having at least one optical brick 6 that can be made of a transparent material, is designed to be movably fitted into the accommodation area 41. Moreover, in the embodiment shown in FIG. 4, there is a light-guiding element 61 being arranged in each light guide unit having at least one optical brick 6 in a manner that each of the plural light guide units having at least one optical brick 6 is further formed with at least one light-guiding element 61 at a position corresponding to the optical path of the beam emitted from the at least one incident light source 51 of the light emitting unit 5. In addition, in this embodiment, there are a plurality of triangle-shaped first prisms 611 and second prisms 612 being arranged on the bottom and a side of each light guide unit having at least one optical brick 6, and thus the light-guiding element 61 can be formed as an optical fiber or a light refractive passage communicating with the first and the second prisms 611, 612. It is noted that the optical path in the light guide units having at least one optical brick 6 in this embodiment is formed in a principle similar to that described in FIG. 2, but is different in that the light guide unit having at least one optical brick 6 here is substantially a cube formed by the assembling plural optical bricks of FIG. 2. Similarly, the optical surface is acting as an emanating light source, and the exit of the light-guiding element 61 of each light guide unit having at least one optical brick 6 is arranged connected to the second optical conversion part of another optical brick that are disposed next thereto, and thus, by the conversion of the second optical conversion part and the first optical conversion part of the next light guide unit having at lease one optical brick 6, the beam from the light-guiding element 61 can first be converted into linear beams and then to be converted into at least one point beam so as to be emitted out of the optical surface of the next optical brick.

Operationally, the switch 53 of the light emitting unit 5 should be turned on for enabling the power 52 to provide power to the plural light sources 51 so as to emit light toward the accommodation area 41, and thereafter, the plural light guide unit having at least one optical brick 6 are placed into the accommodation area 41 at any position freely at will or at their predefined positions. If all the light guide units having at least one optical brick 6 had been fitted into the accommodation area 41 correctly at their predefined positions, all the light-guiding elements 61 in those light guide units having at least one optical brick 6 will be positioned corresponding to each other, and thus beams emitted from the light sources 51 will be guided, refracted and transmitted by the cooperation of the light-guiding elements 61, the first prisms 611 and the second prisms 612 in a manner that a graphic zone 93 can be revealed. Consequently, the puzzle game consisted of the plural light guide units that are correctly pieced together is able to emit light uniformly while allowing an illuminated pattern to be displayed.

On the other hand, it is also possible to inset the light guide units having at least one optical brick 6 into the accommodation area 41 before turning on the switch 53, and after all the light guide units having at least one optical brick 6 had be fitted into the accommodation area 41, the switch 53 is then being turned on so as to check whether the light guide units having at least one optical brick 6 had been correctly pieced together or not; and if so, all the light-guiding elements 61 in those light guide units having at least one optical brick 6 will be positioned corresponding to each other, and thus beams emitted from the light sources 51 will be guided, refracted and transmitted by the cooperation of the light-guiding element 61, the first prisms 611 1 and the second prisms 612 in a manner that a graphic zone 93 can be revealed.

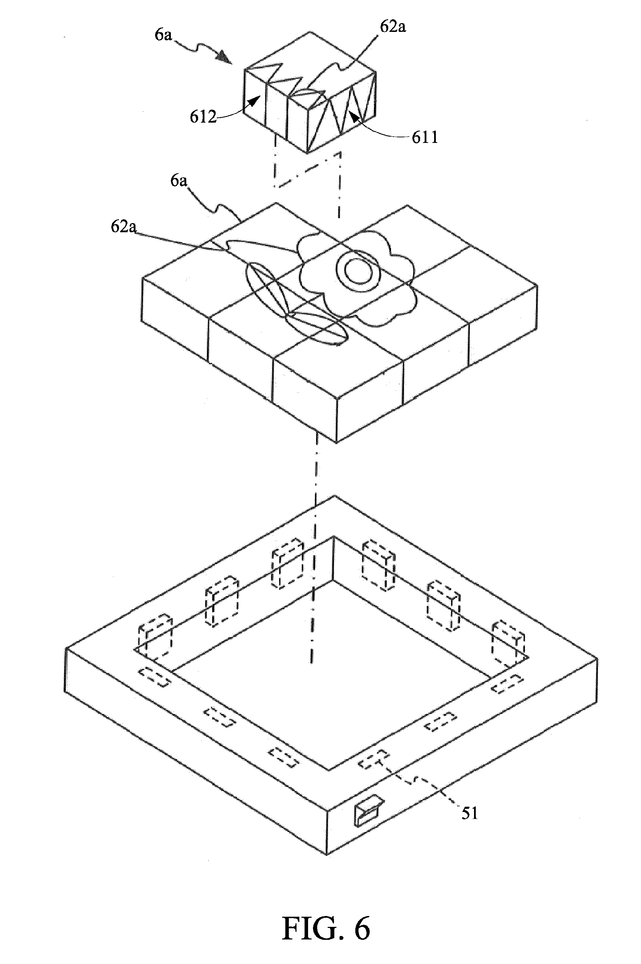

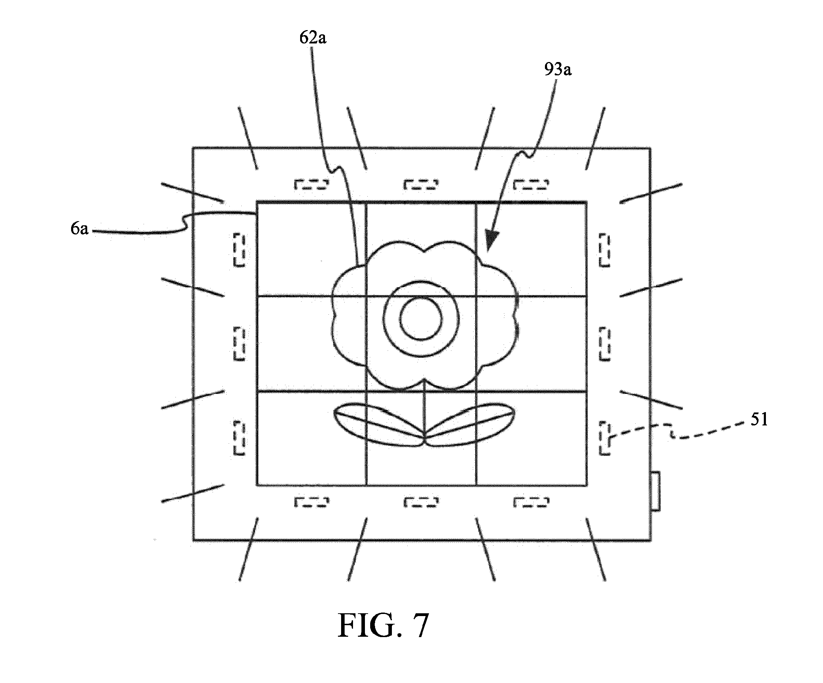

Please refer to FIG. 6 and FIG. 7, which are an exploded view of a first exemplary optical device without light-guiding elements of the present invention, and a schematic diagram showing the first exemplary optical device of FIG. 6 in operation. It is noted that the light-guiding element 61 of FIG. 4 is not a must-have unit in the light guide unit. As the embodiment shown in FIG. 6, there is no such light-guiding element 61 being arranged inside the light guide unit having at least one optical brick 6. In this embodiment shown in FIGs. 6 and 7, the optical device is structured similar to the one disclosed in the above embodiment, but is different in that: each of the light guide unit having at least one optical brick 6a is formed with a pattern 62a on a surface thereof, by that if all the light guide units having at least one optical brick 6a are pieced together correctly, the plural patterns 62a will be assembled correctly to reveal a graphic zone 93a and thus enabling beams from the light sources 51 to be emitted out of the graphic zone 93a, and thus the playfulness and the beautification of the puzzle game consisted of the plural light guide units having at least one optical brick 6a can be improved by the optical patterns, or even 3D projections constructed by the light projected from the puzzle game.

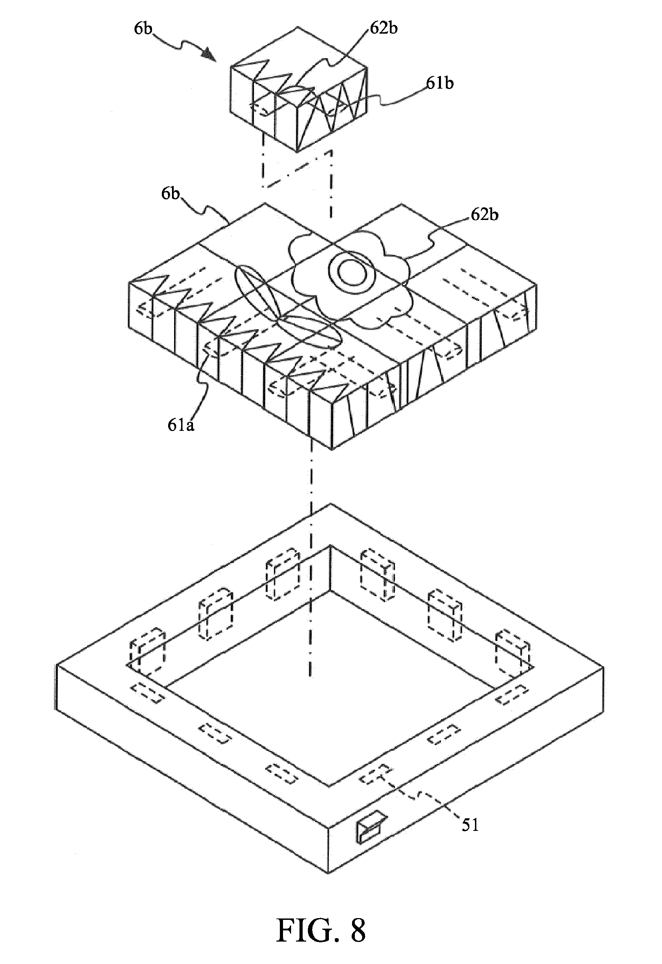

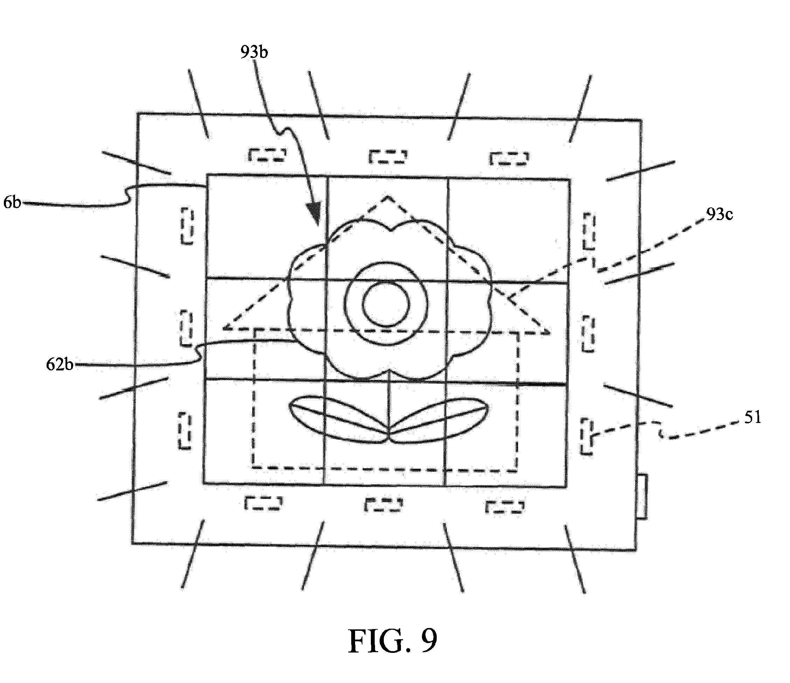

Please refer to FIG. 8 and FIG. 9, which are an exploded view of a first exemplary optical device without light-guiding elements of the present invention, and a schematic diagram showing the first exemplary optical device of FIG. 8 in operation. In this embodiment, the optical device is structured similar to the one disclosed in the above embodiments, but is different in that: each of the light guide unit having at least one optical brick 6b is formed with a pattern 62b on a surface thereof, by that if all the light guide units having at least one optical brick 6b are pieced together correctly, the plural patterns 62b will be assembled correctly to reveal a graphic zone 93b while simultaneously allowing the light-guiding elements 61b of all the light guide units having at least one optical brick 6b to be arranged corresponding to each other for not only enabling beams from the light sources 51 to be emitted out of the graphic zone 93a, but also refracting and transmitting the beams between the light-guiding elements 61b so as to reveal a second graphic zone 93c. Thus, similarly the playfulness and the beautification of the puzzle game consisted of the plural light guide units having at least one optical brick 6b can be improved by the optical patterns, or even 3D projections constructed by the light projected from the puzzle game.

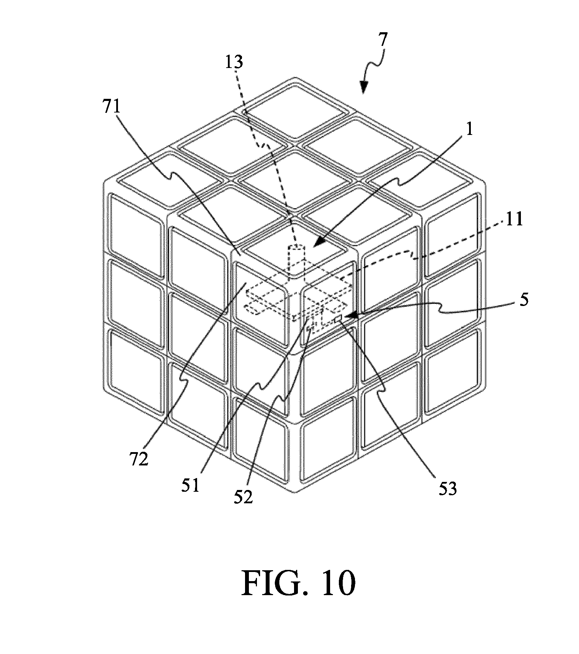

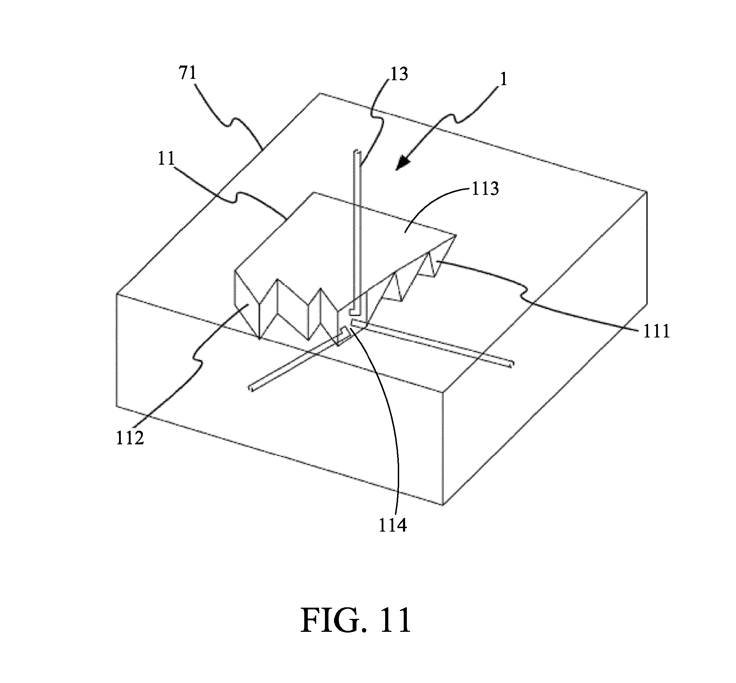

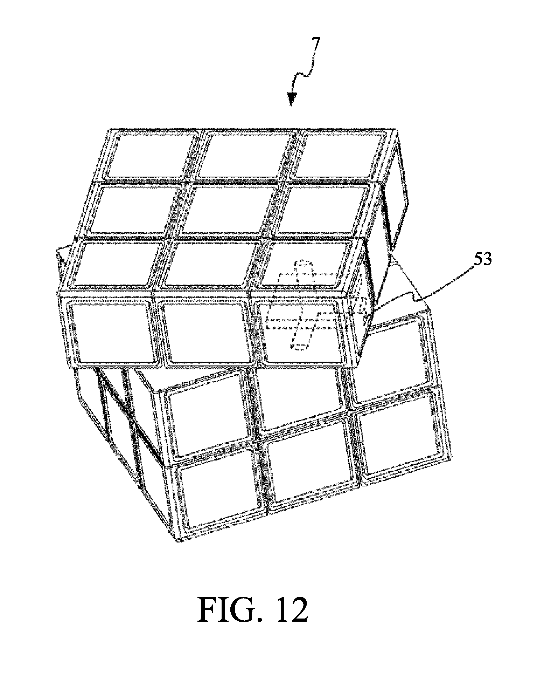

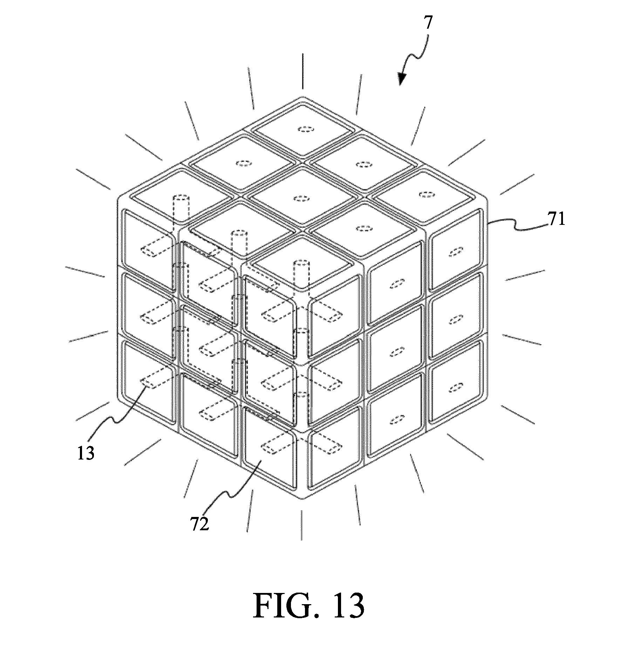

FIG. 10 is an exploded view of a second exemplary optical device of the present invention. FIG. 11 is a schematic diagram showing how each dice in the second exemplary optical device is coupled to a light guide unit. FIG. 12 is a schematic diagram showing the second exemplary optical device of FIG. 10 in operation. FIG. 13 is a schematic diagram showing how a beam is guided to travel inside the second exemplary optical device of the invention. As shown in FIG. 10 to FIG. 13, the present invention further provides an optical device, which comprises: an optical cube 7, a plurality of light guide units 1, and a light emitting unit 5.

The optical cube 7, being a cube consisting of a plurality of dices 71 that are movable coupled to each other by a pivot mechanism to enable each dice 71 to turn independently, and each dice 71 is attached with a color element 72 on a face thereof that is arranged facing to the outside of the optical cube 7. It is noted that each dice 71 is made of a transparent material.

Moreover, each of the plural light guide units 1, that is disposed inside one corresponding dice 71 of the optical cube 7, is composed of at least an optical brick 11 and a light-guiding element 13 that is coupled to the optical brick 11. Operationally, by the pivot mechanism, the dices can be turned independently so as to be arranged at different positions relative to each other on the optical cube 7, but still enabling their light-guiding elements to connect with each other for forming an optical path inside the optical cube 7. Moreover, the optical brick 11 is formed with an optical surface 113, a first optical conversion part, and a second optical conversion part. In this embodiment, there are triangle-shaped first prisms 111 and second prisms 112 formed respectively on the first and the second optical conversion parts, whereas the side of the second optical conversion part where the second prisms 112 is disposed is designated as a light emitting surface 114 and is connected to its light-guiding element 13. In addition, the light-guiding element 13 can be an optical fiber, a light refractive passage or a light reflective passage.

In this embodiment, the light emitting unit 5 is embedded inside one of the plural dices 71 at a position corresponding to the optical brick 11 of the light guide unit 1, and similarly the light emitting unit 5 is composed of: a light source 51, being arranged at positions corresponding to the optical brick 11; a power 52, being electrically connected to the plural light sources 51; and a switch 53, being electrically connected to the plural light sources 51 and the power 52. It is noted that each of the light sources 51 can be a light bulb, nature light, a laser diode or a light emitting diode; the power can be a battery, a solar cell, or an external power source; and the switch can be a dip switch, a push switch, or a touch switch.

Operationally, by the use of the pivot mechanism, the dices 71 can be turned independently so as to be arranged at different positions relative to each other on the optical cube 7, and eventually to return each of the six faces of the optical cube 7 where the color elements 72 are attached to consisting of one color while allowing its light guide units 1 to construct a specific light path in the optical cube 7 by the cooperation between the optical bricks 11 and the light-guiding elements 13. Thereafter, the switch 53 of the light emitting unit 5 is activated for enabling the power 52 to provide power to the light source 51 so as to emit light toward the optical surface 113 of the corresponding optical brick 11. Similarly, according to the principle of optical path described in FIG. 1, beams from the light emitting unit 5 is compressed and converted by the cooperation of the first and the second prisms 111, 112 of the optical brick 11 and then being emitted out of the light emitting surface 114 of the second optical conversion part in a form of a point light source, and then the beams of the point light source are transmitted through the light-guiding elements 13 to the optical bricks 11 inside the light guide units 1 of the other dices 71, and so on. Thus, the playfulness and the beautification of the optical cube are improved.

On the other hand, it is also possible to turn on the switch 51 of the light emitting unit 5 for enabling the power 52 to power the light source 11 in advance, by that beams from the light emitting unit 5 that are projected on the corresponding optical brick 11 is converted by the cooperation of the first and the second prisms 111, 112 of the optical brick 11 and then being fed to the light-guiding unit 13. Therefore, if each of the six faces of the optical cube 7 where the color elements 72 are attached is returned to consisting of one color, a specific light path in the optical cube 7 can be constructed successfully by the cooperation between the optical bricks 11 and the optical guides 13 so that beams from the light emitting unit 5 can be transmitted in the optical path all around the optical cube 7.

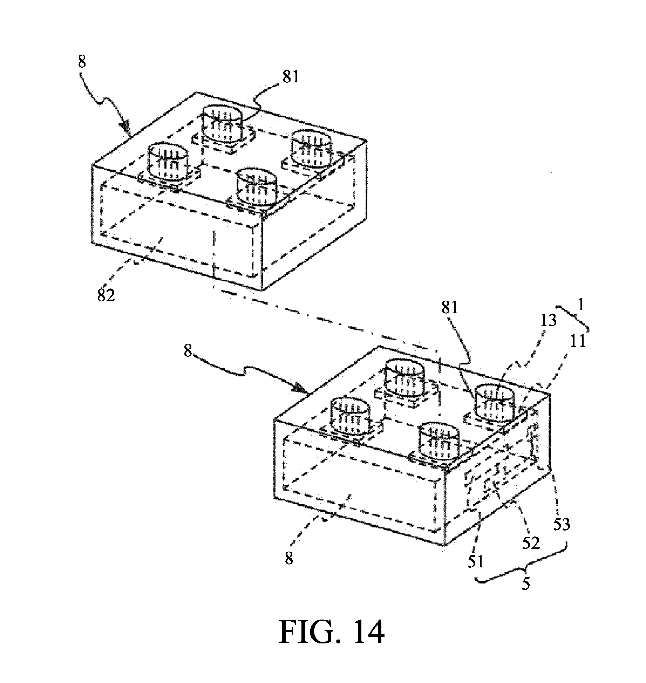

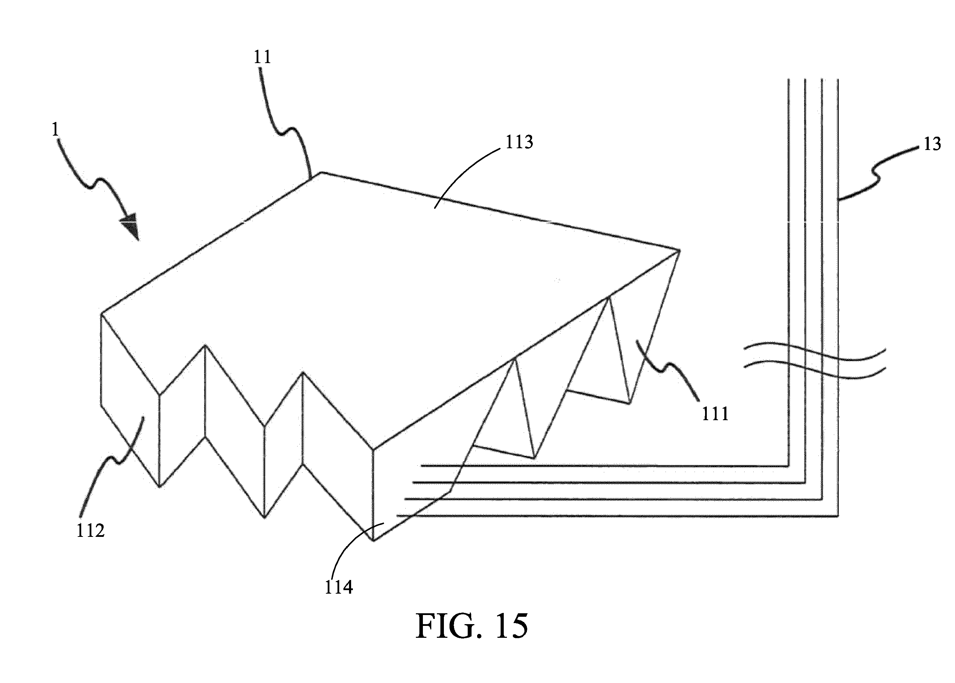

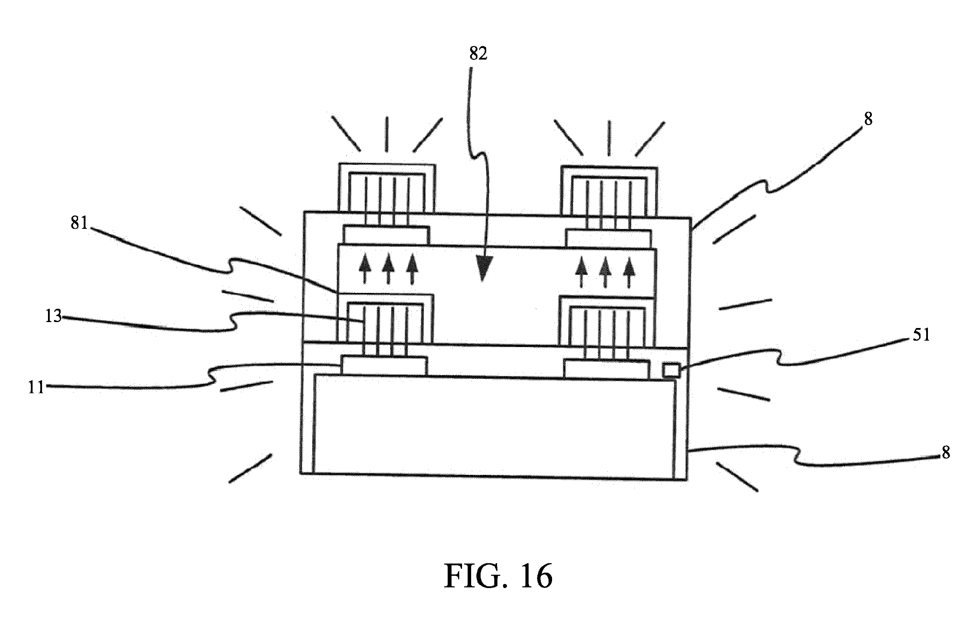

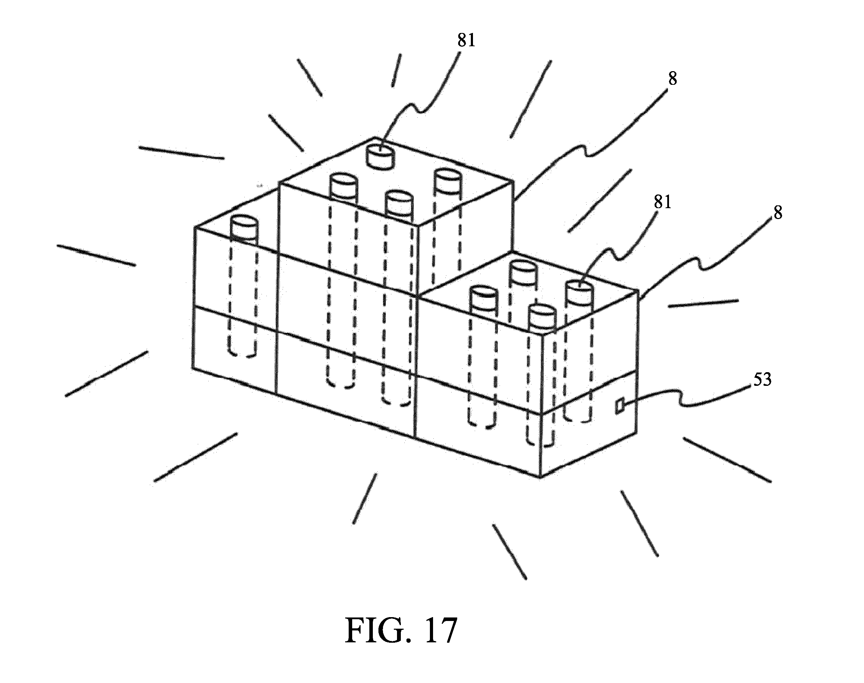

FIG. 14 is an exploded view of a third exemplary optical device of the present invention. FIG. 15 is a schematic diagram showing a light guide unit used in the third exemplary optical device of the present invention. FIG. 16 is a cross sectional view of the third exemplary optical device of the present invention. FIG. 17 is a schematic diagram showing the third exemplary optical device of FIG. 14 in operation. As shown in FIG. 14 to FIG. 17, the present invention further provides an optical toy block, which comprises: a plurality of blocks 8, a plurality of light guide units 1 and at least a light emitting unit 5.

Each of the plural blocks 8, that is made of a transparent material, is formed with a plurality of couplers 81 at the top thereof and an inset zone 82 at the bottom thereof that is formed compatible to the couplers 81 of each block for allowing the same to inset therein.

Each of the plural light guide units 1 that is designed to be integrated inside one block 8 is composed of an light-guiding element 13 and an optical brick 11 arranged corresponding to the light-guiding element 13, and after any number of the plural blocks 8 are assembled and connected to each other, the light guide units 1 that are integrated therein are arranged at positions corresponding each other for forming an optical path inside the assembled structure of the brocks 8. It is noted that each light-guiding element 13 in this embodiment can be optical fibers or other materials that can transmit light. Moreover, each of the optical bricks 11 is formed with an optical surface 113. Similarly, there are triangle-shaped first prisms 111 and second prisms 112 formed respectively on the first and the second optical conversion parts, whereas the side of the second optical conversion part where the second prisms 112 is disposed is designated as a light emitting surface 114 and is connected to its light-guiding element 13. In addition, the light-guiding element 13 can be an optical fiber, a light refractive passage or a light reflective passage.

The light emitting unit 5 is arranged inside one block 8 selected from the plural blocks 8 at a position corresponding to the optical brick 11 of one of the plural light guide units 1. In this embodiment, the light emitting unit 5 is composed of: a light source 51, being arranged at a position corresponding to the optical brick 11; a power 52, being electrically connected to the plural light sources 51; and a switch 53, being electrically connected to the plural light sources 51 and the power 52. It is noted that the light source 51 can be a light bulb, nature light, a laser diode or a light emitting diode; the power can be a battery, a solar cell, or an external power source; and the switch can be a dip switch, a push switch, or a touch switch.

Operationally, any numbers of the blocks 8 can be assembled together into any desired 3D structure at will by coupling the couplers 81 with their corresponding inset zone 82. After a desired 3D structure is achieved, the switch 53 of the light emitting unit 5 can be turned on for enabling the power 52 to provide necessary electricity to the light source 51, and thereby, beams from the light source 51 that are projected on the optical surface 113 of the corresponding optical brick 11 is converted into a point light sources by the cooperation of the first and the second prisms 111, 112 of the optical brick 11 and then being emitted out of the light emitting surface 114 of the second optical conversion part so as to be fed to the corresponding light-guiding element 13 for transmission. Thereafter, the beams of the plural point light sources are transmitted through the light-guiding elements 13 to the optical bricks 11 inside the light guide units 1 of the other blocks 8, and so on. Thus, the playfulness and the beautification of the 3D toy block resulting from the assembled blocks are improved.

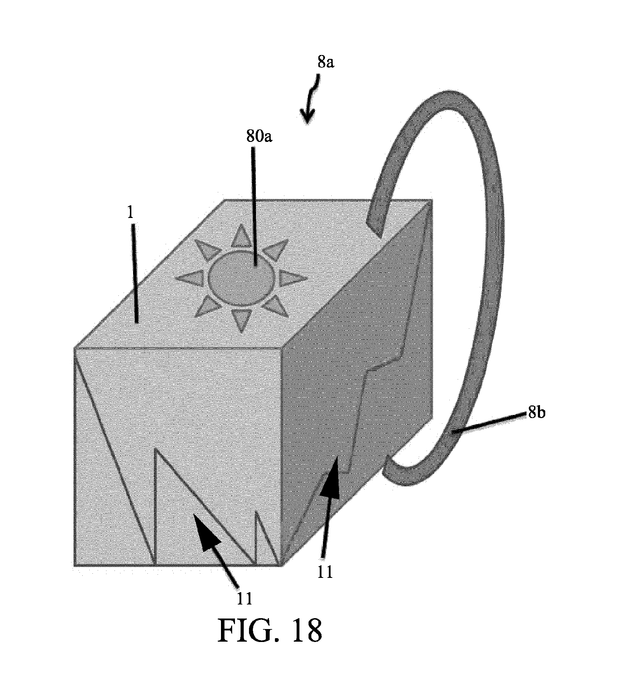

Please refer to FIG. 18, which is a schematic diagram showing a first exemplary optical ornament device of the present invention. As shown in FIG. 18, the optical ornament device 8a includes: at least one light guide unit 1 and a connection element 8b, whereas each light guide unit 1 is substantially an assembly of a plurality of optical bricks 11.

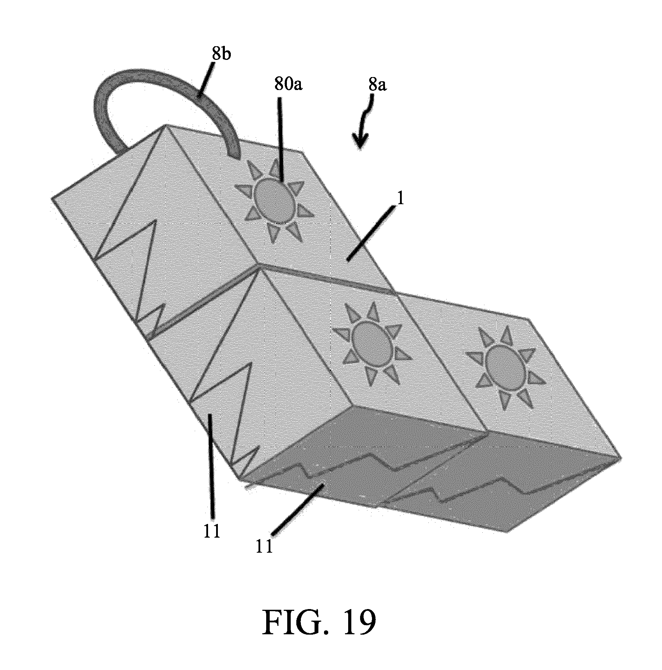

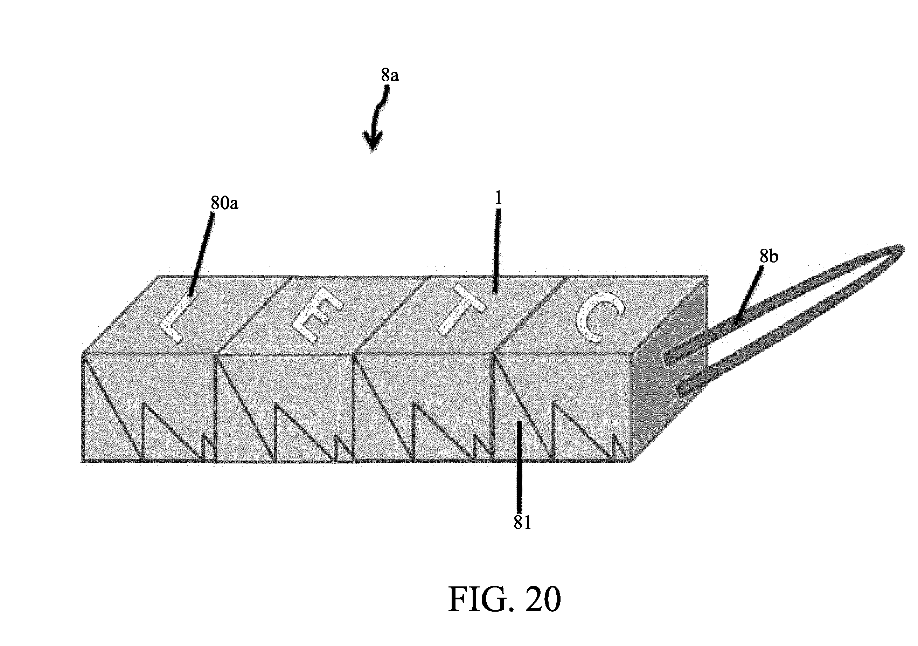

Please refer to FIG. 19 and FIG. 20, which are respectively schematic diagrams showing a second and a third exemplary optical ornament devices of the present invention. In these two embodiments, the provided optical ornament device 8a can be a two-dimensional or a three-dimensional structure composed of a plurality of light guide units 1, whereas each light guide unit 1 can be made of a transparent material like plastic or glass. Moreover, there can be patterns 80a formed on a surface of the optical ornament device 8a, and the patterns 80a can be letters, plants, animals, geometrical patterns, images or even photos.

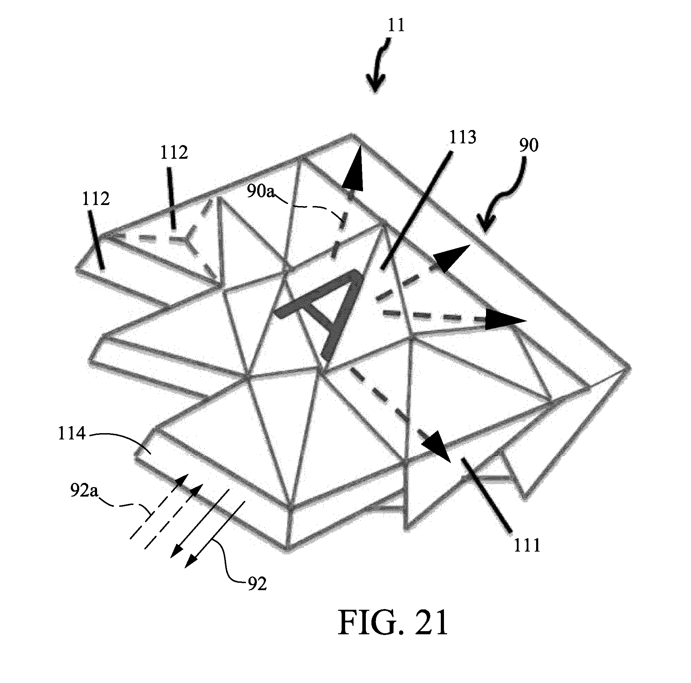

Please refer to FIG. 21, which is a schematic diagram showing an optical brick of the optical ornament device of present invention. As shown in FIG. 21, each optical brick 11 used in the optical ornament device is designed to receive beams from an external planar light source 90 while paralleling the beams from the planar light source 90 so as to convert the planar light source 90 into at least one point light source 92 for emitting light out of the optical brick 11; or to receive beams from a plurality of point light sources 92a while converting those point light sources 92a into a planar light source 90a. It is noted that the external planar light source can be a source of natural light, a light bulb, a light emitting diode, or a laser diode, etc. In this embodiment, each optical brick 11 is formed with an optical surface 113, a first optical conversion part and a second optical conversion part; and similarly there are triangle-shaped first prisms 111 and second prisms 112 formed respectively on the first and the second optical conversion parts, whereas the side of the second optical conversion part where the second prisms 112 is disposed is designated as a light emitting surface 114 for the point light source 92, or is used as an light incident surface for receiving beams from the plural point light sources 92a. Moreover, by the optical structure of the optical bricks, there can be a pattern revealed on the optical ornament device.

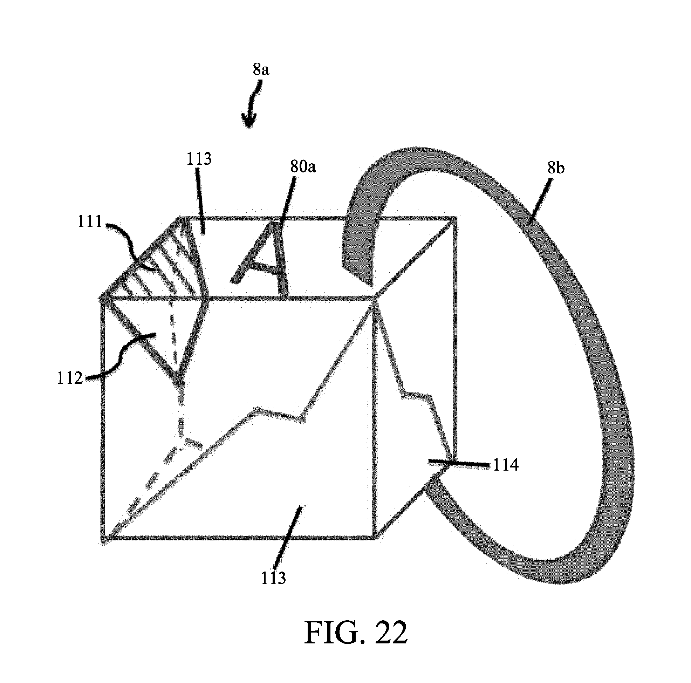

Please refer to FIG. 22, which is a schematic diagram showing the first exemplary optical ornament device of the present invention in operation. As shown in FIG. 22, when beams from an external light source 90, such as a source of natural light, a light bulb, a light emitting diode, or a laser diode, etc., is projected on the optical ornament device 8a, each of the optical bricks 11 included in the optical ornament device 8a will be enabled to gather and guide those beams either to the optical surface 113 or the emitting surface 114 of the optical brick 11. Consequently, by the refractions of the first prisms 111 and the second prisms 112, the gathered beams are transmitted and redirected to be emitted out of the optical brick 11 either through the optical surface 113 or the emitting surface 114, and thus, during the transmission and refraction of the beams in the optical brick 11, a pattern 80a can be revealed on the optical ornament device 8a through the refraction caused by the optical brick 11 and the connection element 8b.

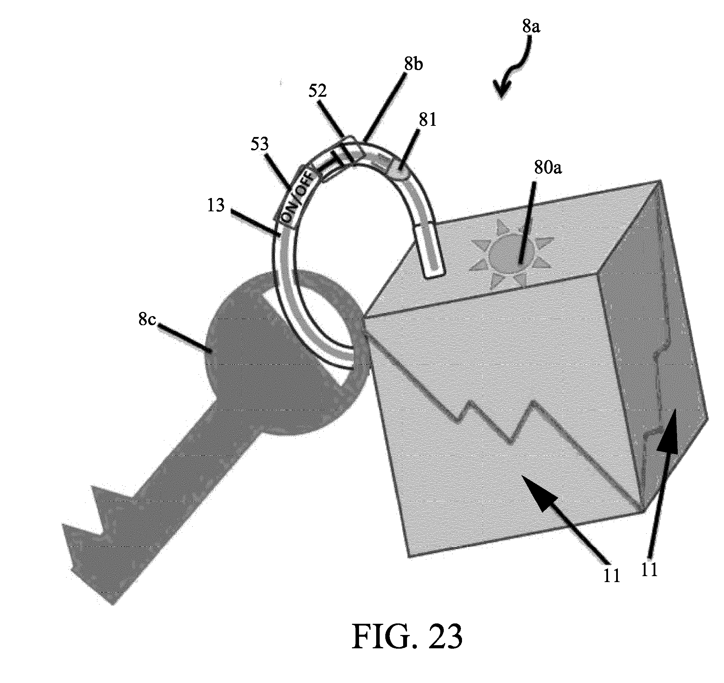

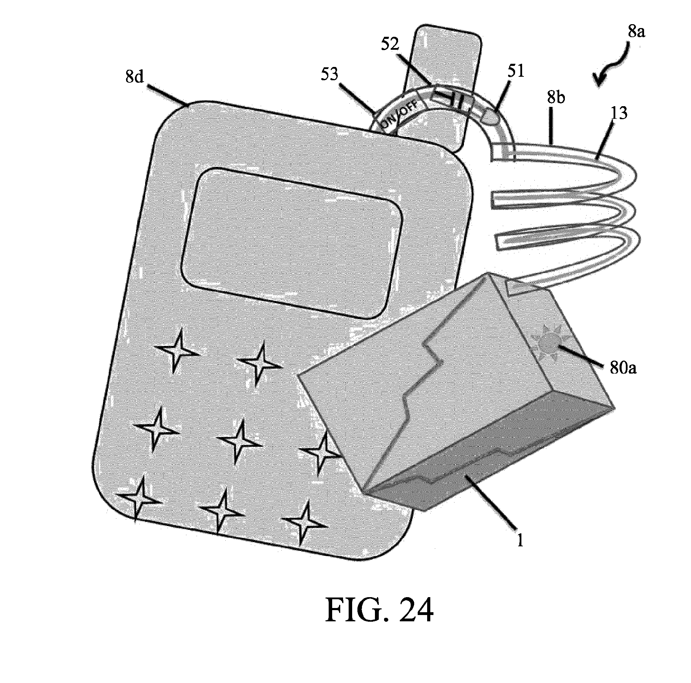

Please refer to FIG. 23 and FIG. 24, which are respectively schematic diagram showing a fourth and a fifth exemplary optical ornament devices of the present invention. Both the fourth embodiment and the fifth embodiment are structure about the same as the one shown in the first embodiment of FIG. 22, but are different in that: the connection element 8b has an light-guiding element 13 disposed thereat in a manner that the light-guiding element 13 is connected to the optical ornament device 8a by the two ends thereof; and also the connection element 8b further has a light emitting unit 5 disposed thereat at a position corresponding to the light-guiding element 13. It is noted that, in this embodiment, the light-guiding element can be a stripe optical fiber, or a coil elastic optical fiber. Moreover, the light emitting unit 5 comprises: a light source 51, disposed corresponding to the light-guiding element 13; a power 52, electrically connected to the light source 51; whereas the light source 51 can be a light emitting diode or a light bulb, nature light, and the power 52 can be a mercury battery or solar cell. In addition, there can also be a switch 53 that is disposed at a position between the light source 51 and the power 52 while being electrically connected to the two.

Operationally, the switch 53 of the light emitting unit 5 can first be turned on for enabling the power 52 to provide power to the light source 51 so as to emit light toward the light-guiding element 13, and thereafter, through the guiding of the light-guiding element 13, the beams from the light source 51 can be paralleled and then transmitted to the optical brick 11 of the optical ornament device 8a, where the paralleled beam can be refracted and then emitted out of the optical brick 11, and thus, during the transmission and refraction of the beams in the optical brick 11, a pattern 80a can be revealed on the optical ornament device 8a through the refraction caused by the optical brick 11 and the connection element 8b.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

## Claims

1. A light guide unit, comprising:
at least one optical brick, each formed with an optical surface, a first optical conversion part, and a second optical conversion part;
wherein, the optical surface is provided for receiving beams from an incident light source or for acting as an emanating light source for emitting light therefrom; the first optical conversion part is arranged at a position corresponding to the optical surface for paralleling beams from the incident light source so as to convert the incident light source into at least one first linear light source, or for guiding beams from at least one second linear light source to be emitted out of the optical surface while converting the at least one second linear light source into a planar light source; and the second optical conversion part is connected to a side of the first optical conversion part for receiving and paralleling beams from the at least one first linear light source so as to convert the at least one first linear light source into one point light source for emitting out of the optical brick, or for receiving and guiding beams from at least one second point light source to be emitted out of the second optical conversion part while converting the at least one second point light source into the at least one second linear light source.

2. The light guide unit of claim 1, wherein the first optical conversion part is composed of a plurality of first prisms while enabling the plural first prisms to be arranged in a saw-toothed formation.

3. The light guide unit of claim 1, wherein the second optical conversion part is composed of a plurality of second prisms while enabling the plural second prisms to be arranged in a saw-toothed formation.

4. An optical device, comprising:
a carrying frame, being formed with an accommodation area on a surface thereof;
at least a light emitting unit, being integrated in the carrying frame and used to act as the combination of at least one incident light source; and
a plurality of light guide units, each being designed to be movably fitted into the accommodation area, and each formed with at least an optical brick having an optical surface, a first optical conversion part, and a second optical conversion part, in a manner that the optical surface is provided for acting as an emanating light source for emitting light therefrom; the first optical conversion part is arranged at a position corresponding to the optical surface for receiving and guiding beams from at least one linear light source to be emitted out of the optical surface while converting the at least one linear light source into the emanating light source; and the second optical conversion part is connected to a side of the first optical conversion part for receiving and guiding beams from at least one point light source to be emitted out of the second optical conversion part while converting the at least one point light source into the at least one linear light source.

5. The optical device of claim 4, wherein each sidewall of the accommodation area is formed using a transparent material.

6. The optical device of claim 4, wherein each of the plural light guide units is further formed with at least one light-guiding element at a position corresponding to the optical path of the beam emitted from the at least one incident light source of the light emitting unit.

7. The optical device of claim 4, wherein the light emitting unit further comprises:
a plurality of light sources;
a power, electrically connected to the plural light sources; and
a switch, electrically connected to the plural light sources and the power.

8. The optical device of claim 7, wherein each of the light sources can be a light bulb, nature light, a laser diode or a light emitting diode.

9. The optical device of claim 7, wherein the power can be a battery, a solar cell, or an external power source.

10. The optical device of claim 7, wherein the switch can be a dip switch, a push switch, or a touch switch.

11. The optical device of claim 4, wherein each light guide unit can be made of a transparent plastic material, a transparent polymer material, a glass material or a crystal material.

12. The optical device of claim 4, wherein each light guide unit that is provided from receiving beams from the at least one incident light source is formed with a pattern on its surface or by its optical structure, and thereby, according to the arrangement of the plural light guide units in the accommodation area, a first graphic zone is formed by the cooperation of the beams emitted from the emanating light source that are emitted out of the optical surfaces of the optical bricks.

13. The optical device of claim 6, wherein a second graphic zone is formed by the cooperation of the light-guiding elements in the arrangement of the plural light guide units when the light-guiding element is being illuminated by the light emitting unit.

14. The optical device of claim 6, wherein each light guide unit that is provided for receiving beams from the at least one incident light source is formed with a pattern on its optical surface, and thereby, according to the arrangement of the plural light guide units in the accommodation area, a first graphic zone is formed by the cooperation of the beams emitted from the emanating light source that are emitted out of the optical surfaces of the optical bricks; and there is a second graphic zone being formed by the cooperation of the light-guiding elements in the arrangement of the plural light guide units that are arranged corresponding to each other or freely at a condition when the light guiding element is being illuminated by the at least one incident light source and the light from the at least one incident light source is being transmitted by the light-guiding elements.

15. An optical device, comprising:
an optical cube, being a cube consisting of a plurality of dices that are movable coupled to each other by a pivot mechanism to enable each dice to turn independently, and each dice is attached with a color element on a face thereof that is arranged facing to the outside of the optical cube;
a plurality of light guide units, each being coupled to the dice and being composed of at least an optical brick and a light-guiding element that is coupled to the optical brick, while each of the optical bricks is formed with an optical surface, a first optical conversion part, and a second optical conversion part, in a manner that the optical surface is provided for receiving beams from an incident light source; the first optical conversion part is arranged at a position corresponding to the optical surface for paralleling beams from the incident light source so as to convert the incident light source into at least one linear light source; and the second optical conversion part is connected to a side of the first optical conversion part for receiving and paralleling beams of the at least one linear light source so as to convert the at least one linear light source into one point light source for emitting out of the optical brick; and
at least a light emitting unit, being arranges inside at least one dice selected from the plural dices at a position corresponding to one light guide unit selected from the plural light guide units so as to be used as the incident light source.

16. The optical device of claim 15, wherein each dice is made of a transparent material.

17. The optical device of claim 15, wherein the first optical conversion part of each optical brick is composed of a plurality of first prisms while enabling the plural first prisms to be arranged in a saw-toothed formation; and the second prisms while enabling the plural second prisms to be arranged in a saw-toothed formation.

18. The optical device of claim 15, wherein each light-guiding element can be a device consisting of: an optical fiber, a light refractive passage or a light reflective passage.

19. The optical device of claim 15, wherein the light emitting unit further comprises:
a light source, arranged at a position corresponding to the light guide unit;
a power, electrically connected to the plural light sources; and
a switch, electrically connected to the plural light sources and the power.

20. The optical device of claim 19, wherein the light source can be a light bulb, nature light, a laser diode or a light emitting diode.

21. The optical device of claim 19, wherein the power can be a battery, a solar cell, or an external power source.

22. The optical device of claim 19, wherein the switch can be a dip switch, a push switch, or a touch switch.

23. An optical device, comprising:
a plurality of blocks, each being formed with a plurality of couplers at the top thereof and an inset zone at the bottom thereof that is formed compatible to the couplers of each block for allowing the same to inset therein, and each having a plurality of light guide units being composed of a light-guiding element and at least an optical brick arranged corresponding to the light-guiding element, and in a condition that after any number of the plural blocks are assembled and connected to each other, the light guide units that are integrated therein are arranged at positions corresponding each other for forming an optical path inside the assembled structure of the blocks, and each of the optical bricks being formed with an optical surface, a first optical conversion part, and a second optical conversion part, in a manner that the optical surface is provided for receiving beams from an incident light source; the first optical conversion part is arranged at a position corresponding to the optical surface for paralleling beams from the incident light source so as to convert the incident light source into at least one linear light source; and the second optical conversion part is connected to a side of the first optical conversion part for receiving and paralleling beams of the at least one linear light source so as to convert the at least one linear light source into one point light source for emitting out of the optical brick; and
at least one light emitting unit, each being arranges inside at least one block selected from the plural blocks to be used as the incident light source.

24. The optical device of claim 23, wherein each of the plural blocks and light-guiding element is made of a transparent material.

25. The optical device of claim 23, wherein the first optical conversion part of each optical brick is composed of a plurality of first prisms while enabling the plural first prisms to be arranged in a saw-toothed formation; and the second prisms while enabling the plural second prisms to be arranged in a saw-toothed formation.

26. The optical device of claim 23, wherein the light emitting unit further comprises:
a light source, arranged at a position corresponding to the optical bricks;
a power, electrically connected to the plural light sources; and
a switch, electrically connected to the plural light sources and the power.

27. The optical device of claim 26, wherein the light source can be a light bulb, nature light, a laser diode or a light emitting diode.

28. The optical device of claim 26, wherein the power can be a battery, a solar cell, or an external power source.

29. The optical device of claim 26, wherein the switch can be a dip switch, a push switch, or a touch switch.

30. An optical ornament device, comprising:
at least a light guide unit having at least one optical brick, each being formed with an optical surface, a first optical conversion part, and a second optical conversion part, in a manner that the optical surface is provided for receiving beams from an incident light source or for acting as an emanating light source for emitting light therefrom; the first optical conversion part is arranged at a position corresponding to the optical surface for paralleling beams from the incident light source so as to convert the incident light source into at least one first linear light source, or for guiding beams from at least one second linear light source to be emitted out of the optical surface while converting the at least one second linear light source into a planar light source; and the second optical conversion part is connected to a side of the first optical conversion part for receiving and paralleling beams from the at least one first linear light source so as to convert the at least one first linear light source into one point light source for emitting out of the optical brick, or for receiving and guiding beams from at least one second point light source to be emitted out of the second optical conversion part while converting the at least one second point light source into the at least one second linear light source; and
a connection element, for connecting to the at least one optical brick.

31. The optical ornament device of claim 30, wherein each light guide unit is made of a transparent material.

32. The optical ornament device of claim 30, wherein each light guide unit is formed with a pattern on its optical surface.

33. The optical ornament device of claim 32, wherein the pattern can be letters, plants, animals, geometrical patterns, images or photos.

34. The optical ornament device of claim 30, wherein each light guide unit is enabled to connected to an object using the connection element, while allowing a light formed inside the connection element to be connected to the light guide unit; and the connection element further has a light emitting unit mounted thereto at a position corresponding to the light-guiding element.

35. The optical ornament device of claim 34, wherein the light-guiding element is made of a transparent material.

36. The optical ornament device of claim 34, wherein the light emitting unit further comprises:
a light source, disposed at a position corresponding to the light-guiding element; and
a power, electrically connected to the light source; and
a switch, electrically connected to the plural light sources and the power.

37. The optical ornament device of claim 36, wherein the light source can be a light bulb, nature light, or a light emitting diode.

38. The optical ornament device of claim 36, wherein the power can be a mercury battery or a solar cell.

39. The optical ornament device of claim 36, wherein the switch can be a dip switch, a push switch, or a touch switch.
